# EUROPÄISCHE PATENTSCHRIFT

(11) **EP 1 754 623 B1**
(45) Veröffentlichungstag und Bekanntmachung des Hinweises auf die Patenterteilung: **31.10.2012**
(21) Anmeldenummer: 06016895.2
(22) Anmeldetag: 12.08.2006
(51) Int. Cl.: B60N 2/02, B60N 2/22, B60N 2/18, B60N 2/30

(54) **Fahrzeug mit verstellbarem Rücksitz**
Vehicle with adjustable rear seat
Véhicule avec un siège arrière réglable

(30) Priorität: 19.08.2005 DE 102005039310
(43) Veröffentlichungstag der Anmeldung: 21.02.2007
(73) Patentinhaber: GM Global Technology Operations LLC, Detroit, MI 48265-3000 (US)
(72) Erfinder: Gimbel, Hans-Peter, 65468 Trebur (DE)
(74) Vertreter: Strauss, Peter

(56) Entgegenhaltungen:
- DE-C1- 4 333 123
- DE-C1- 10 045 066
- US-A1- 2004 239 137

## Beschreibung

Die Erfindung betrifft ein Fahrzeug mit verstellbarem Rücksitz, wobei der Rücksitz eine Sitzschale, ein von dieser aufgenommenes Sitzpolster, einen Lehnenträger, einen von diesem aufgenommenes Lehnenpolster sowie eine im Lehnenträger gelagerte Kopfstütze aufweist, wobei die Sitzschale und der Lehnenträger gelenkig miteinander verbunden sind, sowie der Lehnenträger in seinem oberen Bereich in der Karosserie schwenkbar gelagert ist.

Bei Fahrzeugen, insbesondere Personenkraftfahrzeugen finden in aller Regel Sitze Verwendung, bei denen das eigentliche Sitzteil durch eine Sitzschale und ein von dieser aufgenommenes Sitzpolster und die Rückenlehne durch einen Lehnenträger und ein von diesem aufgenommenes Lehnenpolster gebildet ist.

Die bisher bekannten, verstellbaren Rücksitze werden vorzugsweise mittels gerader Sitzschienen horizontal verstellt. Dies setzt voraus, dass der Karosserieboden im Sitzverstellbereich eben ausgeführt ist. In der Regel befindet sich die Rücksitzanlage direkt über dem Kraftstofftank, d.h. der in diesem Bereich ebene Karosserieboden hat im Vergleich zu einem Karosserieboden mit integrierter Sitzrampe ein geringeres Tankvolumen zur Folge. Weiterhin sind zur Befestigung der Sitzverstellschienen und Gurtschlösser, als auch zur Aufnahme der Kräfte massive Verstärkungsbleche am Karosserieboden vorzusehen. Diese Verstärkungen wirken sich ebenfalls nachteilig auf das Tankvolumen, das Fahrzeuggewicht und die Kosten aus. Verstellbare Rücksitze werden in der Regel optional eingebaut. Dies führt dazu, dass aufgrund der vorstehend beschriebenen Karosserieverstärkungen die Basisfahrzeuge mit Mehrgewicht und Mehrkosten belastet werden.

Zwischen den in der Basisausstattung verbauten, feststehenden Rücksitzanlagen und den bisher bekannten, verstellbaren Rücksitzanlagen sind keine Synergieeffekte vorhanden. Dies bedeutet, dass die Entwicklung von optionalen, verstellbaren Rücksitzanlagen die Entwicklungskosten als auch die Investitionen für Werkzeuge und Fertigungsanlagen verdoppelt.

Solche Rücksitze sollen verstellt werden, um den Sitzkomfort der Personen zu erhöhen. Die Sitze sind zumindest in zwei unterschiedlichen Stellungen positionierbar, einer Standardstellung und einer Komfortstellung.

In der DE 101 43 807 A1 ist ein Fahrzeug der eingangs genannten Art beschrieben. Bei diesem dient die Verstellung des Rücksitzes aber dem Zweck, diesen aus einer Gebrauchsstellung in eine Nichtgebrauchsstellung zu überführen. In der Nichtgebrauchsstellung bilden der Sitz, die Lehne und die Kopfstütze im wesentlichen eine horizontal angeordnete Gerade auf Höhe der Gürtellinie des Fahrzeugs, so dass sich der Laderaum eines Personenkraftwagens beträchtlich nach vorne erweitern lässt, unter den Bereich des in der Nichtgebrauchsstellung befindlichen Rücksitzes. Überdies ist dieser erweiterte Laderaum durch den darüber befindlichen Rücksitz nicht von außen einsehbar. Die Laderaumvergrößerung kann die gesamte Rücksitzanordnung betreffen, sich somit über die gesamte Innenraumbreite des Fahrzeugs erstrecken.

In der DE 199 28 854 ist ein Fahrzeug mit verstellbarem Rücksitz beschrieben, der gleichfalls, zur Vergrößerung des Laderaums, aus einer Gebrauchslage in eine Nichtgebrauchslage verstellbar ist, wobei dort allerdings der Sitz gegen die Lehne geklappt wird.

Auch aus der EP 0 736 412 B1 ist ein Fahrzeug mit verstellbarem Rücksitz bekannt, der zum Zweck der Vergrößerung des Laderaums verstellt wird. Zum Erreichen der Nichtgebrauchslage ist der Sitz um eine vordere Achse in eine vertikale Position schwenkbar, ferner die Lehne um eine obere Achse in eine horizontale Position schwenkbar, wobei Mittel im Bereich des dann vorderen Endes der Lehne vorgesehen sind, die in Aufnahmen des dann oberen Endes des Sitzes einsteckbar sind. Es ergibt sich somit im vorderen Bereich der Lehne und dem oberen Bereich des Sitzes eine formschlüssige Verbindung von Lehne und Sitz.

In der DE 30 45 309 A1 ist ein Fahrzeug mit einem verstellbaren Rücksitz beschrieben. Bei diesem lässt sich nur die Lehne in unterschiedlichen Zwischenstellungen anordnen, insbesondere in einer variablen Neigung, bis zu einer Endstellung, in der die Lehne auf dem Sitz aufliegt. Abgesehen von dieser Verstellung der Lehne ist keine Verstellung des Rücksitzes, insbesondere nicht des Sitzes möglich.

Ein Fahrzeug mit verstellbarem Rücksitz ist ferner aus der DE 100 45 066 C1 bekannt. Dort ist das Sitzteil des Rücksitzes in Längsrichtung des Fahrzeuges durch seitlich an einer Sitzschale angelenkte, parallele vordere Längslenker und hintere Längslenker verlagerbar am Boden der Karosserie des Fahrzeugs gelagert. Beim Schwenken der vorderen und hinteren Längslenker wird die Sitzschale in Längsrichtung und Höhenerstreckung des Fahrzeugs verstellt. Wegen dieser Lenkerbewegung ergibt sich eine Zwangsbewegung der Sitzschale in Längsrichtung und Höhenerstreckung des Fahrzeugs beim Schwenken der Lenker. Ein Lehnenträger der Rückenlehne des Fahrzeugsitzes ist um eine Schwenkachse mittels beidseitig an der Rückenlehne angeordneter Schwenkbeschläge verschwenkbar mit der Sitzschale verbunden. Im Bereich des oberen Endes liegt der Lehnenträger über eine Verbindungsvorrichtung an der Karosserie an, wobei der Lehnenträger im Bereich relativ verschieblich zur Karosserie ist. Die Verbindungsvorrichtung, die stangen- oder rollenförmige Wälzkörper aufweist, erlaubt eine Relativbewegung von oberem Ende des Lehnenträgers und Karosserie in vertikaler Richtung.

Ein Fahrzeug mit verstellbarem Rücksitz, das gemäß den Merkmalen des Oberbegriffs des Patentanspruchs 1 ausgebildet ist, ist aus der US 2004/0239137 A1 bekannt.

Aufgabe der Erfindung ist es, ein Fahrzeug der eingangs genannten Art so weiter zu bilden, dass, zur Komfortsteigerung für den Insassen des Fahrzeugs, ein Verstellen des Rücksitzes in unterschiedliche Stellungen möglich ist, ohne dass es einer grundlegenden Änderung der Karosserie, ausgehend von dem Basisfahrzeug, bedarf.

Gelöst wird die Aufgabe durch ein Fahrzeug mit verstellbarem Rücksitz, das gemäß den Merkmalen des Patentanspruchs 1 ausgebildet ist.

Die Erfindung basiert auf der Idee, den Karosserieboden, die Radgehäuse, die Einbaulage der Lehne des Rücksitzes und sämtliche karosserieseitigen Aufnahmen für Lager und Schlösser der Lehne des Rücksitzes zu belassen. Die Verstellung des Rücksitzes soll ausschließlich durch Hinzufügen von Bauteilen entstehen, ohne dabei die Karosserie zu verändern. Es werden somit die eingangs beschriebenen Nachteile vollständig vermieden. Diese Vorgehensweise erlaubt es, insbesondere bei kleinen Fahrzeug-Jahresvolumen, kostengünstig Sonderausstattungen anbieten zu können.

Bei dem erfindungsgemäßen Fahrzeug ist somit der Sitz, konkret die Sitzschale, verstellbar und bewegt aufgrund der Anlenkung der Lehne, konkret des Lehnenträgers, an der Sitzschale, bei einer Verstellbewegung die Lehne mit, die um deren obere Schwenkachse schwenkt. Die im Karosserieboden gelagerten Stellmittel, die die Sitzschale aufnehmen, gewährleisten hierbei die Verstellbarkeit der Sitzschale in Längsrichtung und Höhenerstreckung des Fahrzeugs. Bei einem Verfahren der Sitzschale nach vorne, wird diese geringfügig angehoben und bei einem Verfahren der Sitzschale nach hinten diese geringfügig abgesenkt. Bei Beibehaltung der Kontur des Karosseriebodens des Basisfahrzeugs ist eine Überführung des Rücksitzes, insbesondere von einer Standardstellung, mit relativ steil stehender Lehne, in eine Komfortstellung mit flacher angeordneter Lehne möglich.

Vorzugsweise ist somit der Karosserieboden der Karosserieboden des Basisfahrzeugs. Die Sitzschale ist gemäß der Erfindung über zwei, seitlich der Sitzschale angeordnete Beschlagbleche mit dem Lehnenträger schwenkbar verbunden. Hierdurch kann auf besonders einfache Art und Weise die schwenkbare Anlenkung von Sitzschale und Lehnenträger bewerkstelligt werden. Der Lehnenträger ist mittels eines Drehscharniers an einem Rücksitzlehnenblech befestigt. Dieses Rücksitzlehnenblech ist dadurch gekennzeichnet, dass das Bauteil selbst, als auch dessen Lagerung und Befestigung an der Karosserie identisch ist mit dem des nicht verstellbaren Rücksitzes. Das Rücksitzlehnenblech ist somit das Rücksitzlehnenblech des Basisfahrzeugs. Der Lehnenkörper ist vorteilhaft mittels eines Schlosses an der Karosserie-Seitenwand verriegelbar. Durch Entriegeln des Schlosses kann die Lehne, trotz Verstellvorrichtungen, umgeklappt und die vollständige Durchladehöhe des Koffer- bzw. Laderaums genutzt werden. Die Lehne ist beispielsweise im Verhältnis 40 : 60 geteilt, wobei das 60%-Teil mit einer Durchladeöffnung und einer ausklappbaren Armlehne ausgestattet sein kann.

Gemäß der Erfindung ist vorgesehen, dass die Stellmittel für die Sitzschale Stellhebel aufweisen und die Sitzschale vorne über zwei beidseitig der Sitzschale angeordnete Stellhebel im Karosserieboden gelagert ist. Der jeweilige Stellhebel ist vorzugsweise L-förmig ausgebildet. Aufgrund dieser Form ist ein einfaches Überführen des Sitzes beim Verstellen sowohl in Längsrichtung des Fahrzeuges als auch in Höhenerstreckung des Sitzes möglich. Die Verstellung der Sitzschale ist auf unterschiedliche Art und Weise möglich. Es ist insbesondere daran gedacht, die Sitzschale mechanisch oder elektrisch zu verstellen.

Die im Lehnenträger gelagerte Kopfstütze ist vorzugsweise gleichfalls verstellbar gestaltet. Es wird als besonders vorteilhaft angesehen, wenn, entsprechend der jeweils eingestellten Sitzposition, die Kopfstütze mechanisch oder auch elektrisch mit verstellt wird. Die elektrische Verstellung von Sitz, Rückenlehne und Kopfstütze erlaubt dem Insassen, eine bequeme und entspannte Sitzposition einzunehmen. Der Mittelplatz der Rücksitzanordnung kann wahlweise mit dem rechten oder linken Außensitz mit verstellt werden. Alternativ kann der Mittelsitz auch feststehend ausgeführt sein, wobei das mittlere Sitzteil derart gestaltet ist, dass es vom Nutzer des Fahrzeugs herausgenommen und beispielsweise durch eine Komfort-Mittelkonsole ersetzt werden kann.

Im Unterschied zu den bekannten, verstellbaren Rücksitzanlagen, deren Rücksitzlehne an einem Karosserie-Querträger befestigt bzw. geführt ist, ist die Lehne vorzugsweise so gestaltet, dass der Lehnenträger mit dem Schloss an der Karosserie-Seitenwand verriegelt ist. Durch Entriegeln des Schlosses kann der Lehnenträger, trotz der Verstellvorrichtungen, umgeklappt und die vollständige Durchladehöhe des Koffer- bzw. Laderaums benutzt werden.
Bei dem erfindungsgemäßen Fahrzeug ist es somit nicht erforderlich, eine spezifische Karosserie, insbesondere einen spezifischen Karosserieboden vorzusehen, zum Verstellen des Rücksitzes bzw. der aus den Rücksitzen gebildeten Rücksitzanlage. Es ergeben sich damit keine Auswirkungen auf das Tankvolumen. Es sind keine Verstärkungsbleche am Karosserieboden wegen der Sitzverstellfunktion erforderlich, hiermit geht eine Ersparung von Kosten und Gewicht einher. Es sind nur geringe Investitionen für Werkzeuge und Fertigungsanlagen, geringe Entwicklungskosten und geringe Produktkosten zu verzeichnen. Der verstellbare Rücksitz ist durchaus auch im Kombi-Fahrzeug einsetzbar. Überdies können bestehende Fahrzeug unkompliziert mit dem verstellbaren Rücksitz nachgerüstet werden.

Die Sitzschale des Rücksitzes kann zur sicheren Aufnahme des Sitzpolsters schalenförmig, beispielsweise mit einem stabilen zumindest bereichsweise umlaufenden Rahmen oder aus einem in sich stabilen Material wie Hartkunststoff oder Metall ausgebildet und auf die Abmessungen des Sitzpolsters abgestimmt sein. Abhängig von der Konstruktion des Rücksitzes kann an der Stelle der Sitzschale auch ein anderer Polsterträger verwendet werden, der im Wesentlichen die Funktionen der beschriebenen Sitzschale übernimmt, jedoch nicht schalenförmig ausgebildet ist. So ein Polsterträger kann beispielsweise rahmen- oder kastenförmig oder auch als gegossenes, gestanztes und/oder geschweißtes Teil ausgebildet sein.

Bevorzugte Weiterbildungen der Erfindungen ergeben sich aus den abhängigen Unteransprüchen und der nachfolgenden Beschreibung.

Nachfolgend wird ein Ausführungsbeispiel der Erfindung, ohne hierauf beschränkt zu sein, unter Bezugnahme auf die Zeichnungen näher erläutert. In der Zeichnung zeigt:
- Figur 1: eine räumliche Ansicht der Karosserie eines Fahrzeuges, für einen Teilausschnitt im Bereich der Rücksitzanlage, mit den für die Erfindung relevanten Strukturelementen der Rücksitzanlage,
- Figur 2: eine Explosionsdarstellung der in Figur 1 gezeigten Teile,
- Figur 3: eine Seitenansicht des erfindungsgemäßen verstellbaren Rücksitzes, in einer Standardstellung, und
- Figur 4: eine Ansicht des Rücksitzes gemäß Figur 3, veranschaulicht für eine Komfortstellung des Rücksitzes.

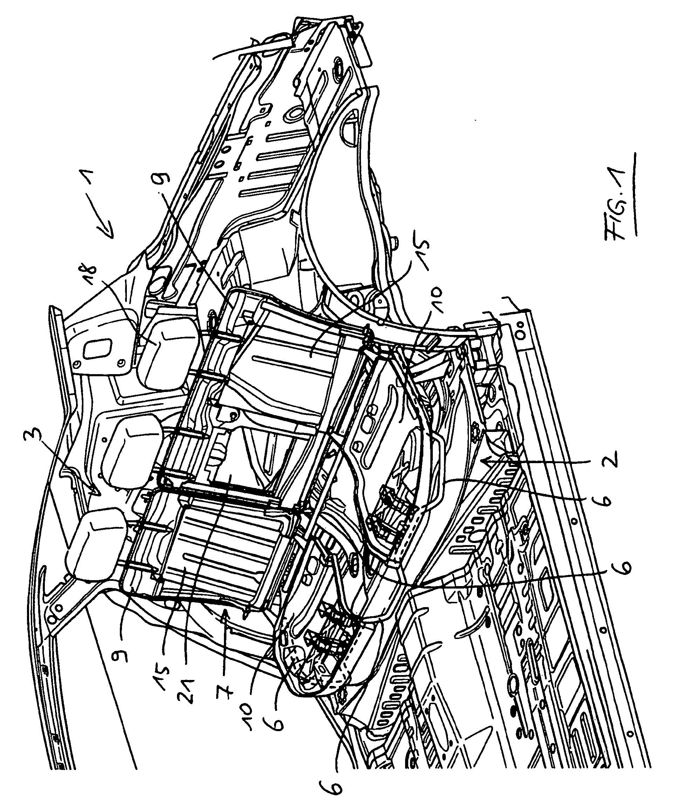

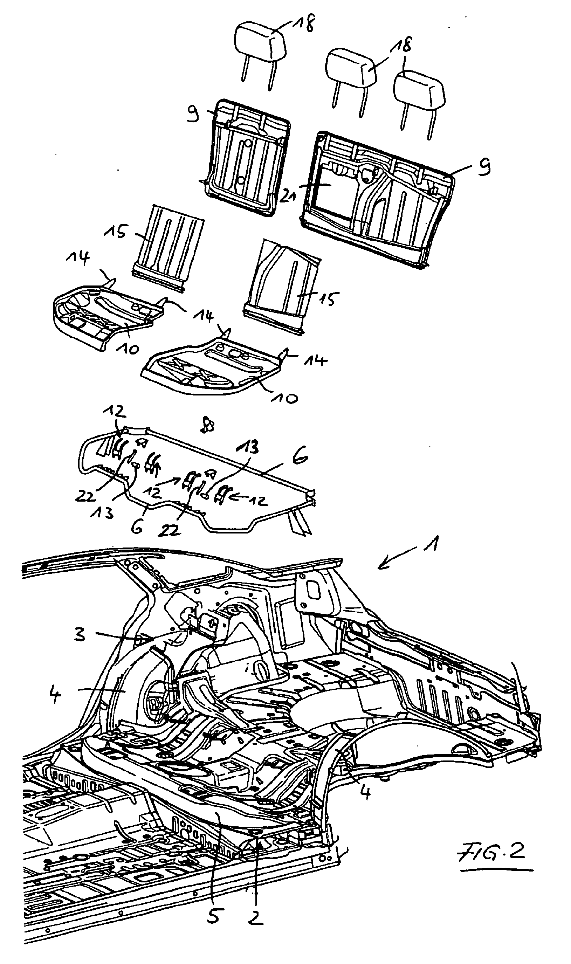

Die Figuren 1 und 2 zeigen die Karosserie 1 eines Personenkraftwagens. Mit der Bezugsziffer 2 ist der Karosserieboden, mit der Bezugsziffer 3 die jeweilige Karosserieseitenwand bezeichnet. Zur Karosserie 1 sind ferner die Radgehäuse 4 der Hinterräder veranschaulicht. Die Karosserie 1 nimmt im Bereich des Karosseriebodens, oberhalb des Tanks 5, einen Rahmen 6 auf, der seinerseits der Aufnahme der Rücksitzanordnung 7 dient, die durch zwei äußere Rücksitze und einen dazwischen befindlichen Mittelsitz gebildet ist. Die vorliegende Erfindung betrifft die Verstellbarkeit der beiden äußeren Rücksitze, unabhängig voneinander, wobei durch Verstellung des in Fahrtrichtung links angeordneten Rücksitzes 8, durch Verbindung des Mittelsitzes mit diesem Rücksitz 8, beide Sitzeinheiten zusammen verstellt werden. Im Zusammenhang mit der nachfolgenden Beschreibung des Rücksitzes 8 gilt Entsprechendes für den in Fahrtrichtung rechts angeordneten Rücksitz.

Der Karosserieboden 2, die Radgehäuse 4, die Einbaulage der Lehne des Rücksitzes, die durch ein karosserieseitiges Rücksitzlehnenblech 9 vorgegeben ist und sämtliche karosserieseitigen Aufnahmen für Lager und Schlösser des Rücksitzlehnenbleches 9 werden belassen, wie bei der Karosserie 1 des Basisfahrzeugs. Die Verstellung des Rücksitzes 8 erfolgt ausschließlich durch Hinzufügen von Bauteilen, ohne dabei die Karosserie zu verändern.

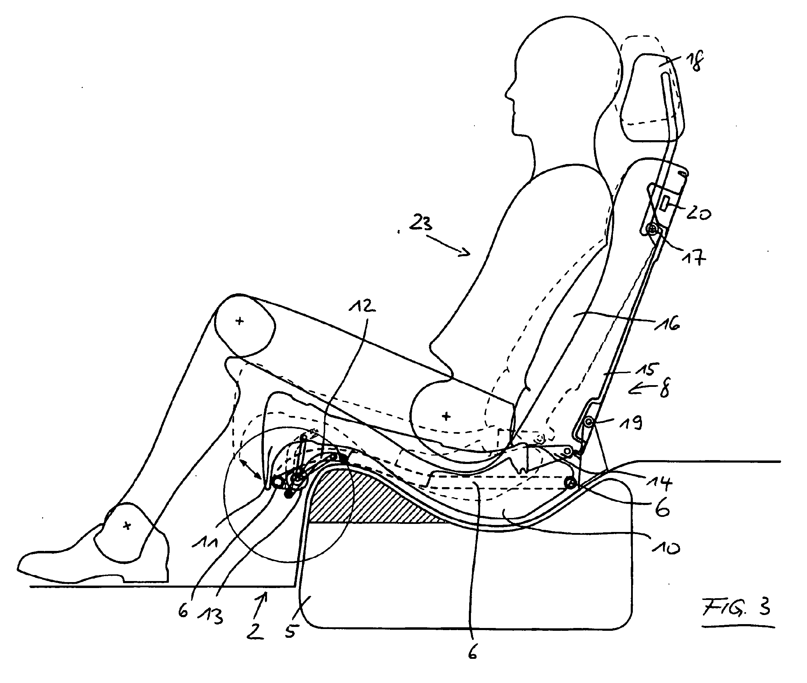

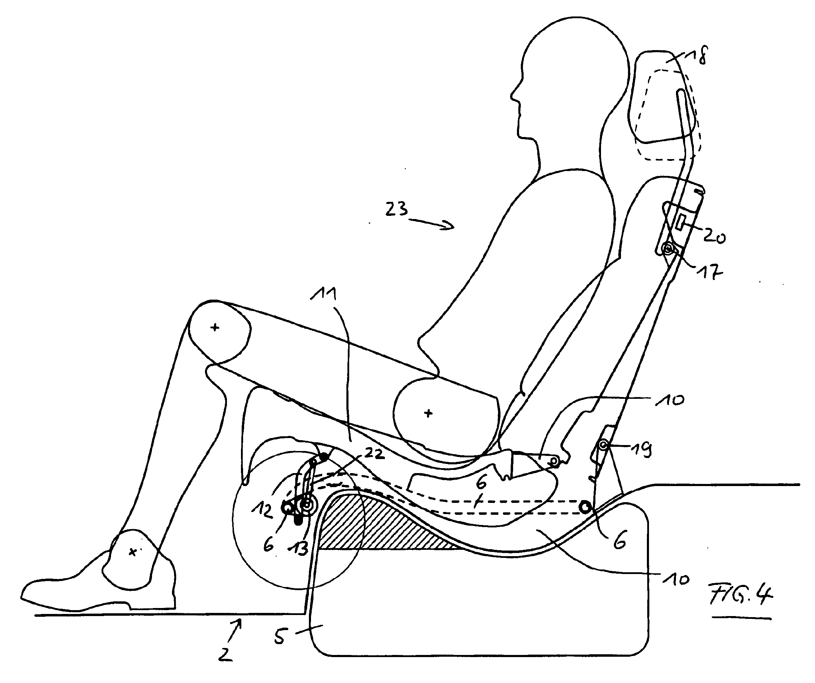

Der Sitz des Rücksitzes 8 ist durch eine Sitzschale 10 und ein von dieser aufgenommenes Sitzpolster 11 gebildet. Die Sitzschale 10 ist an der Vorderkante mit zwei L-förmigen Hebeln 12 am Karosserieboden 2 befestigt. Das Schwenken der Hebel 12 erfolgt beispielsweise mittels eines Elektromotors 13. Durch Schwenken des jeweiligen Hebels 12 um einen definierten Schwenkwinkel wird die Sitzschale 10 vorne in Längsrichtung und Höhenerstreckung des Fahrzeugs verstellt. Im hinteren Bereich ist die Sitzschale 10 mittels zweier Beschlagsbleche 14 mit einem Lehnenträger 15, der als Verstellplatte ausgebildet ist, verbunden. Der Lehnenträger 15 dient der Aufnahme des Lehnenpolsters 16, die zusammen mit dem Lehnenträger 15 die Lehne des Rücksitzes 8 bildet. Wahlweise kann die Sitzschale 10 im hinteren Bereich neben den Beschlagsblechen 14 mit zwei weiteren Hebeln am Karosserieboden 2 befestigt sein. Die L-förmigen Hebel 12 werden über eine Spindel 22 von dem Elektromotor 13 angetrieben und verstellen die Sitzschale 10 entsprechend der vorgegebenen Hebelgeometrie nach vorne und oben bzw. nach hinten und unten. Durch die Beschlagsbleche 14 wird der Lehnenträger 15 und damit auch das Lehnenpolster 16 nach vorne bzw. nach hinten, ausgehend von der in Figur 3 gezeigten Standardstellung in die in Figur 4 gezeigte Komfortstellung bewegt. Selbstverständlich sind durch mehr oder weniger ausgeprägtes Schwenken der Hebel 12 Zwischenstellungen, zwischen Standardstellung und Komfortstellung einstellbar. Der Lehnenträger 15 ist mittels eines Drehscharniers 17 am Rücksitzlehnenblech 9 befestigt. Mittels nicht veranschaulichter federgespannter Umlenkhebel und Seilzüge kann die Bewegung des Lehnenträgers 15 auf eine im Lehnenträger 15 gelagerte Kopfstütze 18 übertragen werden. Je nach Stellung des Lehnenträgers 15 bzw. der eingestellten Komfortposition wird die Kopfstütze 18 nach vorne bzw. nach hinten verstellt. Wahlweise kann, verbunden mit einer elektronischen Abfrage der eingestellten Sitzkomfortstellung, die Kopfstütze 18 auch elektrisch verstellt werden.

Das Rücksitzlehnenblech 9 als auch dessen Lager 19 und Befestigung an der Karosserie 1 sind identisch mit dem des nicht verstellbaren Rücksitzes.

Im Unterschied zu den bekannten, verstellbaren Rücksitzanlagen, deren Rücksitzlehne an einem Karosserie-Querträger befestigt bzw. geführt wird, ist die Rücksitzlehne gemäß dieser Ausführungsform derart gestaltet, dass sie mit einem Schloss 20 an der Karosserieseitenwand 3 verriegelt ist. Durch Entriegeln des Schlosses 20 kann das Rücksitzlehnenblech 9, trotz der Verstellvorrichtungen, nämlich des Drehscharniers 17, des Lehnenträgers 15, der Beschlagsbleche 14 und der Hebel 12, umgeklappt und die vollständige Durchladehöhe des Koffer- bzw. Laderaumes genutzt werden. Die Rücksitzanordnung 7 ist im Verhältnis 40 : 60 geteilt, wobei das 60%-Teil mit einer Durchladeöffnung 21 und einer ausklappbaren Armlehne ausgestattet ist.

In den Figuren 3 und 4 ist mit schraffierten Linien der obere Bereich des Tanks 5 veranschaulicht, der entfallen müsste, wenn statt der erfindungsgemäßen verstellbaren Lagerung des Rücksitzes ein bekannter, verstellbarer Rücksitz Verwendung fände, der mittels gerader Sitzschienen horizontal verstellt würde.

In der Figur 3 ist mit strichlierten Linien zusätzlich die in Figur 4 veranschaulichte Komfortstellung verdeutlicht.

In den Figuren 3 und 4 ist zusätzlich der Schwenkkreis des Hebels 12 veranschaulicht, obwohl der Hebel selbstverständlich nur über einen Teilkreis schwenkbar ist.

Mit der Bezugsziffer 23 ist der auf dem Rücksitz 8 sitzende Fahrzeuginsasse bezeichnet.

### Bezugszeichenliste

- Karosserie: 1
- Karosserieboden: 2
- Karosserieseitenwand: 3
- Radgehäuse: 4
- Tank: 5
- Rahmen: 6
- Rücksitzanordnung: 7
- Rücksitz: 8
- Rücksitzlehnenblech: 9
- Sitzschale: 10
- Sitzpolster: 11
- Hebel: 12
- Elektromotor: 13
- Beschlagsblech: 14
- Lehnenträger: 15
- Lehnenpolster: 16
- Drehscharnier: 17
- Kopfstütze: 18
- Lager: 19
- Schloss: 20
- Durchladeöffnung: 21
- Spindel: 22
- Fahrzeuginsasse: 23

## Patentansprüche

1. Fahrzeug mit verstellbarem Rücksitz (8), wobei der Rücksitz (8) eine Sitzschale (10), ein von dieser aufgenommenes Sitzpolster (11), einen Lehnenträger (15), ein von diesem aufgenommenes Lehnenpolster (16) aufweist, wobei die Sitzschalen (10) und der Lehnenträger (15) gelenkig miteinander verbunden sind, sowie der Lehnenträger (15) in seinem oberen Bereich schwenkbar in der Karosserie (1) gelagert ist und die Sitzschale (10) in ihrem vorderen Bereich im Karosserieboden (2) gelagert ist, wobei die Sitzschale (10) über im Karosserieboden (2) gelagerte Stellmittel (12) in Längsrichtung und Höhenerstreckung des Fahrzeugs verstellbar ist sowie der Lehnenträger (15) mittels eines Drehschamiers (17) an einem Rücksitzlehnenblech (9) befestigt ist, **dadurch gekennzeichnet, dass** im Lehnenträger (15) eine Kopfstütze (18) gelagert ist, sowie die Sitzschale (10) über zwei, seitlich der Sitzschale (10) angeordnete Beschlagbleche (14) mit dem Lehnenträger (15) schwenkbar verbunden ist, die Stellmittel (12) für die Sitzschale (10) Stellhebel (12) aufweisen, wobei zwei beidseitig der Sitzschale (10) angeordnete Stellhebel (12) im Karosserieboden (2) gelagert sind.

2. Fahrzeug nach Anspruch 1, **dadurch gekennzeichnet, dass** der Karosserieboden (2) der Karosserieboden des Basisfahrzeugs ist.

3. Fahrzeug nach Anspruch 1 oder 2, **dadurch gekennzeichnet, dass** das Rücksitzlehnenblech (9) das Rücksitzlehnenblech des Basisfahrzeugs ist.

4. Fahrzeug nach einem der Ansprüche 1 bis 3, **dadurch gekennzeichnet, dass** der Lehnenträger (15) mittels eines Schlosses (20) an der Karosserieseitenwand (3) verriegelbar ist.

5. Fahrzeug nach einem der Ansprüche 1 bis 4, **dadurch gekennzeichnet, dass** der jeweilige Stellhebel (12) L-förmig ausgebildet ist.

6. Fahrzeug nach einem der Ansprüche 1 bis 5, **dadurch gekennzeichnet, dass** die Position der Sitzschale (10) mechanisch oder elektrisch verstellbar ist.

7. Fahrzeug nach einem der Ansprüche 1 bis 6, **dadurch gekennzeichnet, dass** die Kopfstütze (18) verstellbar ist, wobei die Verstellbewegung der Kopfstütze (18) in Abhängigkeit von der Verstellbewegung der Sitzschale (10) erfolgt, insbesondere mittels federgespannter Umlenkhebel und Seilzüge oder, mittels elektronischer Abfrage, auf elektrische Art und Weise.

8. Fahrzeug nach einem der Ansprüche 1 bis 7, **dadurch gekennzeichnet, dass** es zwei äußere, verstellbare Rücksitze (8, 8) aufweist, zwischen denen ein Mittelsitz angeordnet ist, wobei die äußeren Rücksitze (8, 8) unabhängig voneinander verstellbar sind.

9. Fahrzeug nach Anspruch 8, **dadurch gekennzeichnet, dass** der Mittelsitz bei Verstellung eines Außensitzes (8) mit diesem verstellt wird.

## Claims

1. A vehicle with adjustable rear seat (8), with the rear seat (8) having a seat pan (10), a seat cushion (11) accommodated by said seat pan (10), a backrest support (15), a backrest cushion (16) accommodated by said backrest support (15), with the seat pans (10) and the backrest supports (15) being connected in an articulated fashion with one another, and the backrest support (15) is pivotably mounted in its upper region in the vehicle body (1), and the seat pan (10) is mounted in its front region in the body floor (2), with the seat pan (10) being adjustable in the longitudinal direction and the height extension of the vehicle via actuating means (12) mounted in the body floor (2), and the backrest support (15) is fastened to a backrest plate (9) by means of a pivot hinge (17), **characterized in that** a headrest (18) is mounted in the backrest support (15), and the seat pan (10) is pivotably connected with the backrest support (15) via two plate fittings (14) which are arranged to the side of the seat pan (10) and which comprise the actuating means (12) for the seat pan (10), with two actuating levers (12) arranged on either side of the seat pan (10) being mounted in the body floor (2).

2. A vehicle according to claim 1, **characterized in that** the body floor (2) is the body floor of the basic vehicle.

3. A vehicle according to claim 1 or 2, **characterized in that** the backrest plate (9) is the backrest plate of the basic vehicle.

4. A vehicle according to one of the claims 1 to 3, **characterized in that** the backrest support (15) can be locked to the side wall (3) of the body by means of a lock (20).

5. A vehicle according to one of the claims 1 to 4, **characterized in that** the respective actuating lever (12) is L-shaped.

6. A vehicle according to one of the claims 1 to 5, **characterized in that** the position of the seat pan (10) is mechanically or electrically adjustable.

7. A vehicle according to one of the claims 1 to 6, **characterized in that** the headrest (18) is adjustable, with the adjusting movement of the headrest (18) being performed depending on the adjusting movement of the seat pan (10), especially by means of spring-tensioned reversing levers and cable pulls, or in an electrical manner by means of electronic query.

8. A vehicle according to one of the claims 1 to 7, **characterized in that** it comprises two outer adjustable rear seats (8, 8), between which a middle seat is arranged, with the outer rear seats (8, 8) being independently adjustable from one another.

9. A vehicle according to claim 8, **characterized in that** during the adjustment of an outer seat (8) the middle seat is adjusted together with said outer seat (8).

## Revendications

1. Véhicule avec un siège arrière (8) réglable, dans lequel le siège arrière (8) présente une coque de siège (10), un rembourrage de siège (11) logé dans celle-ci, un support de dossier (15), un rembourrage de dossier (16) logé dans celui-ci, les coques de siège (10) et le support de dossier (15) étant reliés entre eux de façon articulée et le support de dossier (15) étant supporté de façon pivotante dans la carrosserie (1) dans sa partie supérieure et la coque de siège (10) étant supportée dans le plancher (2) de la carrosserie dans sa partie antérieure, la coque de siège (10) pouvant être déplacée à l'aide de moyens de réglage (12) supportés dans le plancher (2) de la carrosserie dans le sens de la longueur et de la hauteur du véhicule et le support de dossier (15) étant fixé au moyen d'une charnière pivotante (17) sur une tôle de siège arrière (9), **caractérisé en ce qu'**un appuie-tête (18) est supporté dans le support de dossier (15) et la coque de siège (10) est reliée de façon pivotante au support de dossier (15) par deux tôles de ferrure (14) disposées sur les côtés de la coque de siège (10) et qui présentent les moyens de réglage (12) pour la coque de siège (10), deux leviers de réglage (12) disposés de part et d'autre de la coque de siège (10) étant supportés dans le plancher (2) de la carrosserie.

2. Véhicule selon la revendication 1, **caractérisé en ce que** le plancher (2) de la carrosserie est le plancher de carrosserie du véhicule de base.

3. Véhicule selon la revendication 1 ou 2, **caractérisé en ce que** la tôle de dossier de siège arrière (9) est la tôle de dossier de siège arrière du véhicule de base.

4. Véhicule selon l'une des revendications 1 à 3, **caractérisé en ce que** le support de dossier (15) peut être verrouillé au moyen d'un verrou (20) sur la paroi latérale (3) de la carrosserie.

5. Véhicule selon l'une des revendications 1 à 4, **caractérisé en ce que** chaque levier de réglage (12) est en forme de L.

6. Véhicule selon l'une des revendications 1 à 5, **caractérisé en ce que** la position de la coque de siège (10) peut être réglée par des moyens mécaniques ou électriques.

7. Véhicule selon l'une des revendications 1 à 6, **caractérisé en ce que** l'appuie-tête (18) est réglable, le mouvement de réglage de l'appuie-tête (18) s'effectuant en fonction du mouvement de réglage de la coque de siège (10), en particulier au moyen de leviers de déviation contraints par ressort et de câbles de traction, ou, au moyen d'une interrogation électronique, de manière électrique.

8. Véhicule selon l'une des revendications 1 à 7, **caractérisé en ce qu'**il présente deux sièges arrières extérieurs (8, 8) réglables entre lesquels est disposé un siège central, les sièges arrières extérieurs (8, 8) étant réglables indépendamment l'un de l'autre.

9. Véhicule selon la revendication 8, **caractérisé en ce que** le siège central est réglé lors du réglage d'un siège extérieur (8) en même temps que ce dernier.
